# EUROPEAN PATENT APPLICATION

(11) **EP 1 195 930 A2**
(43) Date of publication of application: **10.04.2002**
(21) Application number: 01307206.1
(22) Date of filing: 24.08.2001
(51) Int. Cl.: H04H 1/00

(54) **Method and apparatus for broadcasting broadcast programmes, comprising a transmission scheduling means which insures the transmission of a programme in a time period which ends at the start of its actual reproduction by the reproduction means**

(30) Priority: 24.08.2000 JP 2000254528
(71) Applicant: MATSUSHITA ELECTRIC INDUSTRIAL CO., LTD., Kadoma-shi, Osaka 571-8501 (JP); TOKYO BROADCASTING SYSTEM INC., Tokyo107-8006 (JP)
(72) Inventor: Mori, Toshiya, Settsu-shi, Osaka-fu, 566-0055 (JP); Harada, Satoshi, Mitake-shi, Tokyo-to, 181-0005 (JP)
(74) Representative: Crawford, Andrew Birkby

(57) **Abstract**

As for specific programs CM1 through CM3 among data broadcasting programs, a broadcasting apparatus transmits the specific programs in the immediately preceding time periods instead of transmitting these programs in their respective reproduction time periods. Thus, a receiving apparatus can reproduce the specific programs without a waiting time for interactive operations from the beginning of the reproduction time periods of the specific programs.

## Description

### BACKGROUND OF THE INVENTION

### (1) Field of the Invention

The present invention relates to a broadcasting apparatus that transmits contents data which makes up a data broadcasting program and the like.

### (2) Description of the Related Art

Recently, digital broadcast for a television set via satellite has been put to practical use and digital broadcast via terrestrial wave also is now shifting to the stage of practical application.

Programs provided by the digital broadcast are classified into a normal program such as a movie and a drama and a data broadcasting program. The normal program mainly consists of a video stream and an audio stream which are reproduced at the same time by the receiving apparatus.

The data broadcasting program allows viewers to experience virtual interactive operations by repeatedly transmitting the program data, for example, at time intervals of 5 seconds. The method for repeatedly transmitting the program data is called a "data carousel transmission method". The program data consists of a plurality of image data which are selectively reproduced in accordance with a viewer's interactive operation. For instance, the image data is described in the Broadcast Markup Language (BML) (for detailed information about this language, see ARIB STD-B24 version 1.0 "Data Coding and Transmission Specification for Digital Broadcasting").

The data broadcasting program may be broadcasted as an independent program and may be broadcasted simultaneously with a normal program. Hereafter, the normal program in the latter case will be refereed to as a "main program." In such a case, for example, a main program such as a movie is scaled down and presented on a part of the screen, and information on the actor who appears in the movie and his masterpieces are presented on another part of the screen as selected by the viewer. For another example, a commercial program (hereafter abbreviated as "CM") as a main program is scaled down and presented on a part of the screen, and detailed information on the product in the CM, information on the producer, and so on are presented on another part of the screen as selected by the viewer.

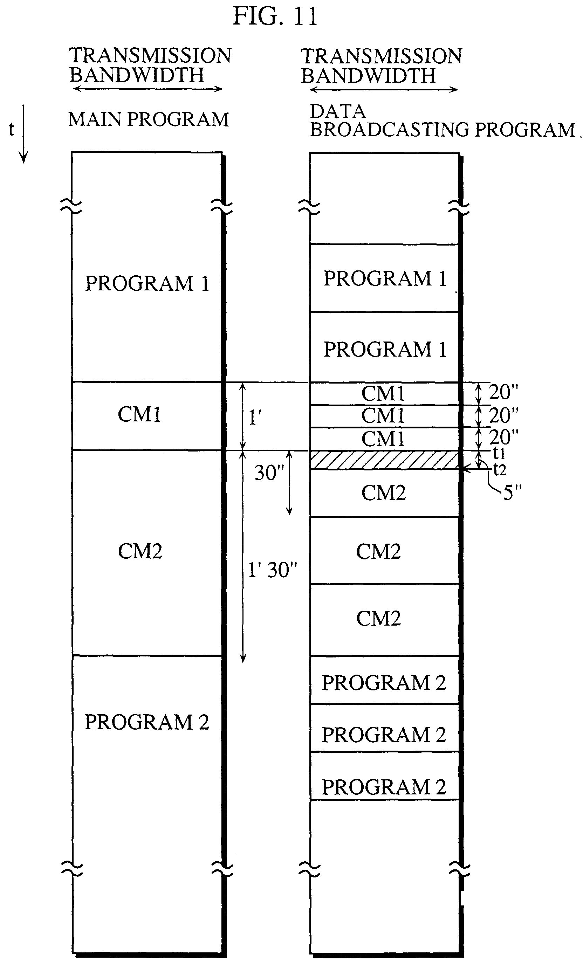

Fig. 11 shows transmission schedules for the broadcast data of a main program and a data broadcasting program. In this figure, the downward direction indicates a time flow and the breadth of the boxes indicates a bandwidth. The broadcast data of the main program consists of a video stream and an audio stream, which is sequentially broadcast as time progresses and is reproduced in real time by the receiving apparatus. Meanwhile, the broadcast data of the data broadcasting program is broadcast according to the data carousel transmission method. For instance, the broadcast data of CM1 is transmitted multiple times in the time period for broadcasting the CM1, and is reproduced interactively by the receiving apparatus.

When the receiving apparatus processes such a data broadcasting program, the viewer has to wait for the next image to be presented after an operation for selecting the next image until the receiving apparatus receives the data of the image (approximately one cycle of the carousel transmission). The receiving apparatus for coping with the problem is disclosed in the Japanese Laid-Open Patent Application No.10-126753. This receiving apparatus does not generate the waiting time by storing the broadcast data in a memory within the receiving apparatus and allowing the viewer to select and read the image data from the memory.

In this case, however, the data of the data broadcasting program is transmitted in the time period for broadcasting the data broadcasting program in the same manner as in the main program as shown in Fig. 11. Then, the receiving apparatus has not yet received all of the data just after beginning of the start of the data broadcasting program, and therefore the viewer cannot make use of interactive operations fully, which causes a problem that presentation of the next image that the viewer selects is delayed.

For instance, as shown in this figure, even if there is some image data that should be reproduced at the start of the program CM2, the receiving apparatus cannot present the image data for the cycle indicated by the diagonally shaded area in the figure until the time t2. This applies to CM1 in the figure as well and becomes a serious problem for the data broadcasting program such as a CM whose broadcast time period is short.

### SUMMARY OF THE INVENTION

To cope with the above-stated problem, the object of the present invention is to provide a broadcasting apparatus and a broadcasting method by which a waiting time for'the receiving apparatus from the start of the broadcast of the program until the start of the reproduction of the contents data for the program can be reduced.

To achieve the above-stated object, a broadcasting apparatus (method) that broadcasts broadcast programs, each of which is to be reproduced by a receiving apparatus in a reproduction time period between a reproduction starting time and a reproduction finishing time, the broadcasting apparatus is made up of: scheduling means (step) for generating a schedule for transmitting the broadcast programs, the schedule including a transmission starting time and a transmission finishing time for each broadcast program; and transmission means (step) for transmitting each broadcast program only in the time period between the transmission starting time and the transmission finishing time according to the schedule, wherein the scheduling means (step) generates the schedule so that (a) as for a specific program among the broadcast programs, a transmission starting time is set at a time a predetermined amount of time before the reproduction starting time of the specific program and a transmission finishing time is set at the reproduction starting time of the specific program, and (b) as for a broadcast program other than the specific program, a transmission starting time is set at the reproduction starting time of the broadcast program and a transmission finishing time is set at the reproduction finishing time of the broadcast program.

With this construction, the specific program is transmitted not in the reproduction time period of the program but in the immediately preceding time period. Therefore, the receiving apparatus can acquire the specific program prior to the reproduction time period of the specific program, so that interactive operations by a viewer can be realized without a waiting time for receiving the data of the specific program from the beginning of the reproduction time period.

Here, in the above-stated broadcasting apparatus, the predetermined amount of time is a time period necessary for transmitting the specific program at least once.

With this construction, the specific program is transmitted at least once in the immediately preceding time period. Therefore, the receiving apparatus can acquire the data of the specific program prior to the reproduction time period.

In addition, in the above-stated broadcasting apparatus, the scheduling means (step) includes generation means (step) for generating (a) first messages which designate the receiving apparatus to store the specific program in a storing unit within the receiving apparatus and (b) a second message which designates the receiving apparatus to reproduce the specific program stored in the storing unit, and the transmission means transmits (a) the first messages for a duration from the transmission starting time to the transmission finishing time of the specific program, and (b) the second message in the reproduction time period of the specific program.

With this construction, the receiving apparatus can be easily controlled so as to store the program data of the specific program within the receiving apparatus in the immediately preceding period and forcefully reproduce the program data that has been stored in the reproduction time period and the program data that starts to be received in the reproduction time period by transmitting the first and the second messages.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
Fig. 1 is a block diagram showing the construction of a broadcasting apparatus according to a preferred embodiment of the present invention;
Fig. 2 shows an example of the program information in which a normal program made up of audiovisual data and a data broadcasting program broadcasted by the data carousel transmission method are reproduced simultaneously;
Fig. 3 shows an example of an audiovisual data transmission schedule;
Fig. 4 shows an example of a contents transmission schedule;
Fig. 5 shows a main program, a data broadcasting program, and messages included in the data modules corresponding to the contents of the data broadcasting program;
Fig. 6 shows correspondences between contents management codes and data modules;
Fig. 7 shows an example of an event message transmission schedule;
Fig. 8 is a flow chart showing an operational procedure for generating and transmitting a data module and an event message;
Fig. 9 is a block diagram showing the construction of a receiving apparatus;
Fig. 10 shows an example of reproduced images; and
Fig. 11 shows a transmission schedule for transmitting broadcast data by a conventional broadcasting apparatus.

### DESCRIPTION OF THE PREFERRED EMBODIMENT

### [Embodiment 1]

### (Construction)

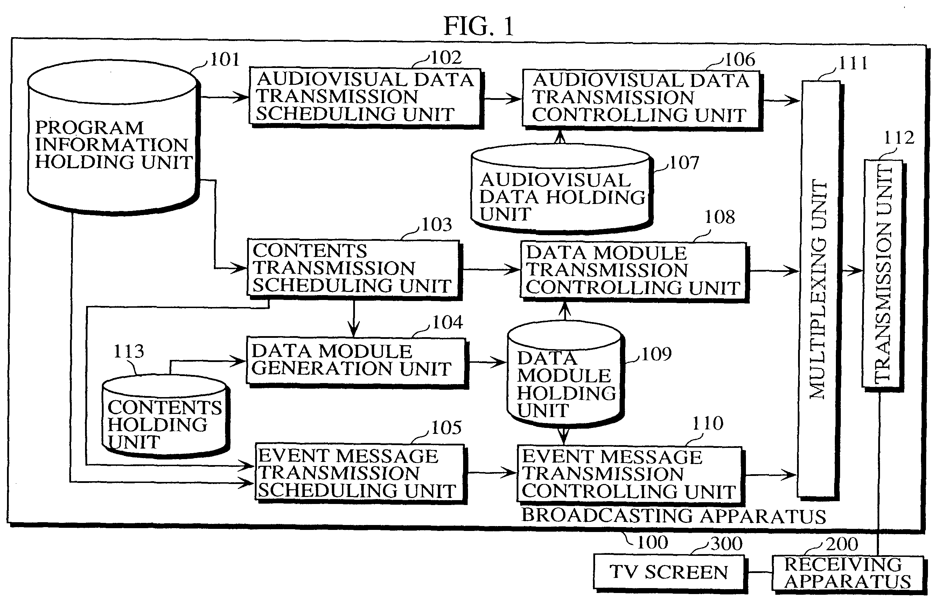

Fig. 1 is a block diagram showing the construction of a broadcasting apparatus according to the first embodiment. As shown in this figure, the broadcasting apparatus 100 is composed of a program information holding unit 101, an audiovisual data transmission scheduling unit 102, a contents transmission scheduling unit 103, a data module generation unit 104, an event message transmission scheduling unit 105, an audiovisual data transmission controlling unit 106, an audiovisual data holding unit 107, a data module transmission controlling unit 108, a contents holding unit 113, a data module holding unit 109, an event message transmission controlling unit 110, a multiplexing unit 111, and a transmission unit 112. This broadcasting apparatus 100 is constructed so that contents data for the specific program among broadcasting programs is transmitted not in the broadcasting time period of these programs (to be precise, a reproduction time period in which the receiving apparatus reproduces the program while presenting the same to viewers) but in the time period immediately before the reproduction time period. For instance, in case that a reproduction time period of 15 sec. is specified to a specific program, all of the broadcast data of the program have been transmitted for a duration from 15 second before the starting time of the reproduction time of the program to the starting time, and any data is not transmitted in the reproduction time period.

As for a normal program composed of audiovisual data (a video stream and an audio stream) and data broadcasting programs other than the above-stated specific program, the broadcast time by the broadcasting apparatus substantially agrees with the reproduction time by the receiving apparatus. Meanwhile, as for the specific program, the time period for transmitting the broadcast data does not necessarily agree with the time for reproducing the broadcast data by the receiving apparatus while presenting the same to the viewers. Accordingly, the latter time (i.e., the time for reproducing the broadcast data by the receiving apparatus while presenting the same to the users) will be hereafter referred to as the reproduction time period.

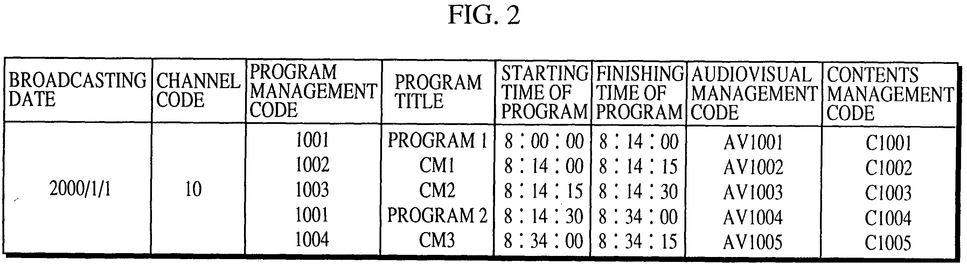

The program information holding unit 101 stores program information. Fig. 2 shows an example of the program information in which a normal program made up of audiovisual data and a data broadcasting program broadcasted by the data carousel transmission method are simultaneously reproduced (e.g., the case where a normal program is scaled down and presented on the screen to associate with the data broadcasting program). Hereafter the normal program in such a case will be called a "main program." In this figure, the program information is composed of a set of information on a broadcasting date, a channel code, a program management code, a program title, a program starting time, a program finishing time, an audiovisual data management code which identifies the audiovisual data that makes up the main program, a contents management code which identifies the content of the data broadcasting program for each set of the main program and the data broadcasting program which should be simultaneously reproduced. A time period between the program starting time and the program finishing time shown in this figure refers to the above-mentioned reproduction time period.

For instance, as for the program information on the program 1 as the main program, the broadcasting date is 2000/1/1, the channel code is 10, the program management code is 1001, the program starting time is 8:00:00, the program finishing time is 8:14:00, and the audiovisual data management code is AV1001, whereas as for the program information on the program 1 as the data broadcasting program, the broadcasting date is 2000/1/1, the channel code is 10, the program management code is 1001, the program starting time is 8:00:00, the program finishing time is 8:14:00, and the contents management code is C1001.

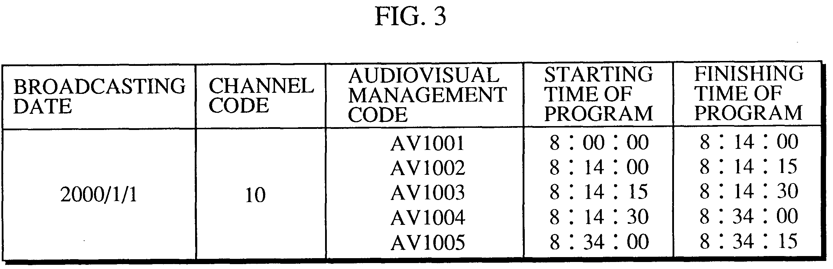

The audiovisual data transmission scheduling unit 102 generates a schedule for transmitting the audiovisual data which makes up the main program in accordance with the program information stored in the program information holding unit 101 and outputs the schedule to the audiovisual data transmission controlling unit 106. Fig. 3 shows an example of an audiovisual data transmission schedule. As shown in this figure, the audiovisual data is transmitted in the reproduction time of the program. On receiving the transmitted audiovisual data, the receiving apparatus reproduces the audiovisual data in real time.

The contents transmission scheduling unit 103 is the most distinctive element in this embodiment, and generates a schedule for transmitting a data broadcasting program so that contents data for the specific program is transmitted not in the reproduction time period of the program but in the time period immediately before the reproduction time period. In this embodiment, the specific programs are commercial programs CM1, CM2, and CM3.

In addition, the contents transmission scheduling unit 103 generates a transmission schedule for control contents that control the receiving apparatus to reproduce the contents of the specific program that has been transmitted in the immediately preceding time period in the reproduction time period of the specific program. Here, the control contents means contents including scripts for control only, which designate the receiving apparatus to perform operations such as display and reproduction. These scripts run when the receiving apparatus receives event messages from the broadcasting apparatus so as to control the operation of the receiving apparatus in accordance with the event messages. For instance, an event message which designates a cache operation has "a message ID and an ID of the data module as a target" as the contents and the script is a program in which the process (i.e., cache) corresponding to the message ID is described for the ID of the contents which should be processed. While, the receiving apparatus, when receiving the event message, executes the script corresponding to the event message.

Here, the contents transmission scheduling unit 103 determines a bandwidth for transmitting the contents of the data broadcasting program. That is, the contents transmission scheduling unit 103 allots a part of the broadcasting bandwidth for transmitting the contents of the specific program and the other part of the broadcasting bandwidth for transmitting the preceding program in a time period preceding to the reproduction time period of the specific program, and allots a bandwidth for transmitting the control contents in the reproduction time period of the specific program. Here, in case that another specific program should be successively reproduced after the specific program, a part of the above bandwidth is allotted for transmitting the contents of the other specific program.

Hereafter, a time period between a predetermined amount of time before the starting time of the reproduction time period of the specific program and the starting time will be called an "immediately preceding time period". The immediately preceding time period is immediately before the reproduction time period and is a time period in which the contents for the specific program can be transmitted at least once. In this embodiment, the length of the immediately preceding time period (i.e., the above-stated predetermined time period) is the same as that of the reproduction time period. For example, in case of a specific program having a reproduction time period of 15 sec, the immediately preceding time period is set at a time period from a time at 15 second before the starting time of the reproduction time period of the specific program and the starting time.

The contents transmission scheduling unit 103 determines the transmission bandwidth, for example, in accordance with the following rules. Here, D indicates the bandwidth which is allocated for transmitting all contents data.

### (Rule A1)

The bandwidth for transmitting contents data for a specific program in the immediately preceding time period is set at 0.7D.

### (Rule A2)

The bandwidth for transmitting control contents in the reproduction time period of a specific program is set at 1.0D. Here, in case that the reproduction time period of the specific program is the immediately preceding time period of another specific program, the bandwidth for transmitting the control contents is set at 0.3D.

The control contents includes scripts which designate the receiving apparatus to receive the contents of the specific program and cache it in the buffer, to start and finish reproducing the contents which has been cached in the buffer, and so on.

### (Rule A3)

The bandwidth for transmitting a normal program other than the specific program is (a) in the immediately preceding time period, obtained by subtracting the bandwidth for transmitting the specific program from the transmission bandwidth D and (b) in a time period other than the immediately preceding time period, set at the transmission bandwidth D.

According to the above rules, the bandwidth for transmitting the contents of the normal program preceding to the specific program is decreased. However, since the broadcast of the preceding normal program is just before the finishing time in the immediately preceding time period and the contents of the preceding normal program has been cached in the receiving apparatus, it can be considered that the decrease in the bandwidth for transmitting the preceding normal program does not exercise influences.

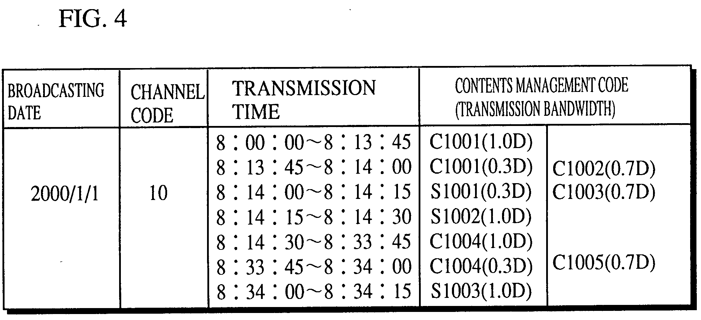

Fig. 4 shows an example of a contents transmission schedule. As shown in this figure, the time period between 8:00:00 and 8:13:45 is for the reproduction time period of the program 1 and is not included in the immediately preceding time periods of the specific programs. In this period, the contents transmission scheduling unit 103 determines the bandwidth for transmitting contents C1001 of the program 1 to be 0.1D (according to Rule A3).

The time period between 8:13:45 and 8:14:00 is for the immediately preceding time period of the specific program CM1. As for this period, the contents transmission scheduling unit 103 determines the bandwidth for transmitting contents C1002 of the specific program to be 0.7D (according to Rule A1) and the bandwidth for transmitting contents C1001 of the program 1 to be 0.3D (according to Rule A3).

The time period between 8:14:00 and 8:14:15 is for the reproduction time period of the specific program CM1 and for the immediately preceding time period of the specific program CM2. As for this period, the contents transmission scheduling unit 103 determines the bandwidth for transmitting control contents S1001 to be 0.3D (according to Rule A2) and the bandwidth for transmitting contents C1003 of the specific program CM2 to be 0.7D (according to Rule A1).

The time period between 8:14:15 and 8:14:30 is for the reproduction time period of the CM2. As for this period, the contents transmission scheduling unit 103 determines the bandwidth for transmitting control contents S1002 to be 1.0D (according to Rule A2).

The time period between 8:14:30 and 8:33:45 is for the reproduction time period of the program 2 and is not included in the immediately preceding time periods of the specific programs. As for this period, the contents transmission scheduling unit 103 determines the bandwidth for transmitting contents C1004 of the program 2 to be 1.0D (according to Rule A3).

The time period between 8:33:45 and 8:34:00 is for the reproduction time period of the program 2 and is included in the immediately preceding time period of the specific program CM3. As for this period, the contents transmission scheduling unit 103 determines the bandwidth for transmitting contents C1005 of the CM3 to be 0.7D (according to Rule A1) and the bandwidth for transmitting contents C1004 of the program 2 to be 0.3D (according to Rule A3).

The time period between 8:34:00 and 8:34:15 is for the reproduction time period of the specific program CM3. As for this period, the contents transmission scheduling unit 103 determines the bandwidth for transmitting control contents S1003 to be 1.0D (according to Rule A2).

The contents holding unit 113 stores contents data, while associating these data with their respective contents codes. Here, the contents data includes graphical images which present information relating to the program, scripts which are executed in accordance with interactive operations by a user, scripts which correspond to event messages, and the like.

The data module generation unit 104 refers to the transmission schedule which is generated by the contents transmission scheduling unit 103, generates a plurality of data modules using contents data stored in the contents holding unit 113, and writes the data module in the data module holding unit 109, while associating the data module with the contents codes. Here, the data module is made from contents data so as to be represented in a form for transmission and a plurality of data modules are generated from a piece of contents data. A piece of contents data corresponds to a data broadcasting program. A data module corresponds to one page (one frame of image) of a data broadcasting program, for example. An ID is assigned to a data module, and the data module with the ID=0 must be cached in the buffer by the receiving apparatus even though there is no explicit instruction. Hereafter, the description will be given assuming that one data module is made from a piece of contents data and a data broadcasting program is specified by one ID of the data module, for the sake of convenience.

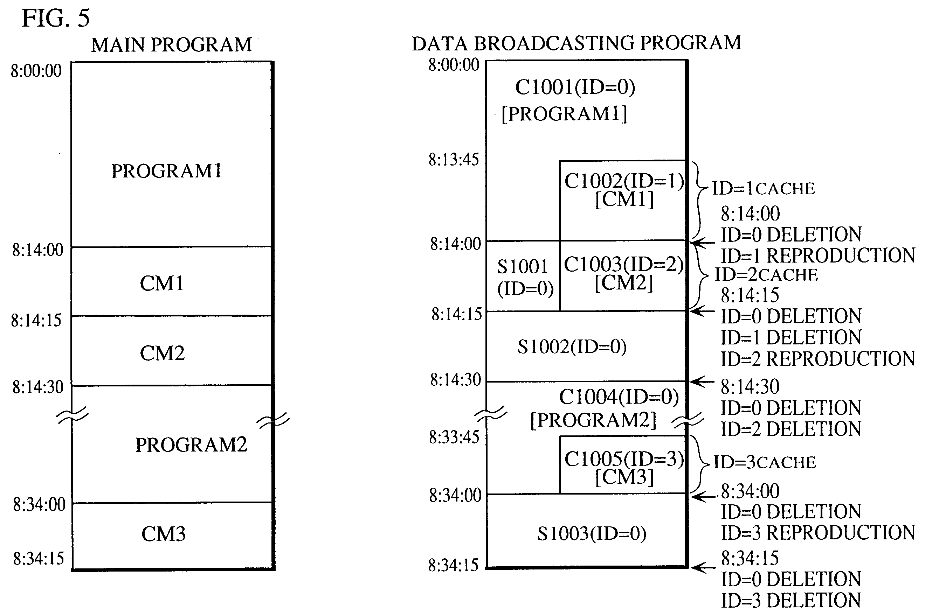

Fig. 5 shows a main program, a data broadcasting program, and event messages corresponding to the contents of the data broadcasting program. In this figure, the downward direction indicates a time flow and the breadth of the boxes indicates a bandwidth, which are conformity with the schedule shown in Fig. 4. For instance, the programs 1 and 2 are a drama and a pro-baseball live broadcast, or the first half and the second half of a drama, while CM1 and CM2 are specific programs.

In addition, at the right side of the drawing for the data broadcasting program in Fig. 5, timing for transmitting event messages are shown (which will be described later).

First, the data module generation unit 104 generates data modules with ID=0 and ID=1 from contents data C1001 and C1002 in accordance with the contents transmission schedule shown in Fig. 4.

Further, the data module generation unit 104 generates a data module with ID=0 which corresponds to control contents S1001. That is, the data module generation unit 104 generates the data module with ID=0 using the control contents S1001.

Also, the data module generation unit 104 generates a data module with ID=0 which corresponds to control contents S1002. That is, the data module generation unit 104 generates the data module with ID=0 using the control contents S1002.

Besides, the data module generation unit 104 generates a data module with ID=0 which corresponds to contents data C1004. That is, the data module generation unit 104 generates the data module with ID=0 using the contents C1004.

Moreover, the data module generation unit 104 generates a data module with ID=0 which corresponds to control contents S1003. That is, the data module generation unit 104 generates the data module with ID=0 using the control contents S1003.

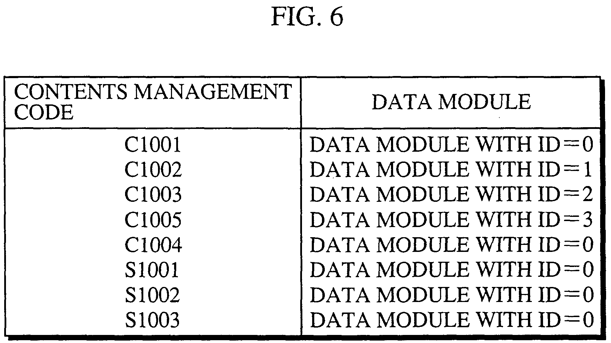

The data module holding unit 109 stores the data modules generated by the data module generation unit 104, while associating the data modules with contents management codes. Fig. 6 shows correspondences between the contents management codes and the data modules.

The event message transmission scheduling unit 105 refers to the contents transmission schedule generated by the contents transmission scheduling unit 103 and generates an event message transmission schedule. There are three types of event messages which each designate to delete, reproduce, and cache the specified contents data. When receiving the event message which designates to delete contents data, the receiving apparatus deletes the contents data from the buffer. When receiving the event message which designates to reproduce contents data, the receiving apparatus reads the contents data from the buffer and reproduce it. When receiving the event message which designates to cache contents data and in case that the contents data has not been cached in the buffer, then the receiving apparatus writes the received contents data in the buffer.

The event message transmission scheduling unit 105 refers to the contents transmission schedule and the program information, and generates a schedule for transmitting an event message which designates for the receiving apparatus to delete contents data from the recording apparatus or to reproduce contents data in the recording apparatus in accordance with the following rules.

### (Rule B0)

In the immediately preceding time period before the reproduction starting time of a specific program, an event message which designates to cache the contents data of the program is transmitted at regular intervals (e.g., 1 sec.).

### (Rule B1)

At the finishing time of the reproduction time period of a program, an event message which designates to delete the contents of the program is transmitted.

### (Rule B2)

At the starting time of the reproduction time period of a specific program, an event message which designates to reproduce the contents of the specific program is transmitted.

### (Rule B3)

As for control contents, an event message which designates to delete the control contents is transmitted at a time when the transmission of the contents data has been completed.

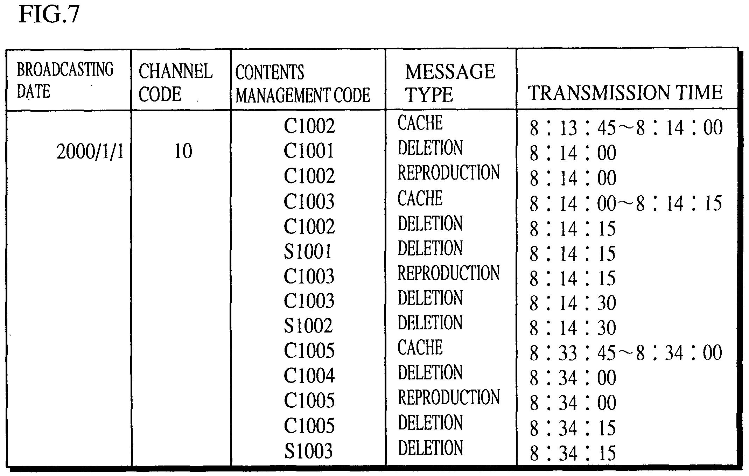

Fig. 7 shows an example of an event message transmission schedule. As shown in this figure, for example, as for contents C1001, an event message which designates to delete the contents is transmitted at 8:14:00 when the program made up of the contents is scheduled to finish (according to Rule B1).

As for contents C1002 for the specific program CM1, an event message which designates to cache the contents is transmitted at regular intervals (e.g., 1 sec.) in the immediately preceding time period between 8:13:45 and 8:14:00 (according to Rule B0), an event message which designates to reproduce the contents is transmitted at 8:14:00 when the program is scheduled to start (according to Rule B2), and an event message which designates to delete the contents is transmitted at 8:15:00 when the program is scheduled to finish (according to Rule B1).

As for control contents S1001, an event message which designates to delete the contents is transmitted at 8:14:15 when the transmission of the contents is scheduled to complete (according to Rule B3).

As for contents C1003 for the specific program CM2, an event message which designates to cache the contents is transmitted at regular intervals (e.g., 1 sec.) in the immediately preceding time period between 8:14:00 and 8:14:15 (according to Rule B0), an event message which designates to reproduce the contents data is transmitted at 8:14:15 when the program is scheduled-to start (according to Rule B2), and an event message which designates to delete the contents is transmitted at 8:14:30 when the program is scheduled to finish (according to Rule B1).

As for control contents S1002, an event message which designates to delete the contents is transmitted at 8:14:30 when the transmission of the contents is scheduled to complete (according to Rule B3).

As for contents C1004, an event message which designates to delete the contents is transmitted at 8:34:00 when the program made up of the contents is scheduled to finish (according to Rule B1)

As for contents data C1005 for the specific program CM3, an event message which designates to cache the contents is transmitted at regular intervals (e.g., 1 sec.) in the immediately preceding time period between 8:33:45 and 8:34:00 (according to Rule B0), an event message which designates to reproduce the contents is transmitted at 8:34:00 when the program is scheduled to start (according to Rule B2), and an event message which designates to delete the contents is transmitted at 8:34:15 when the program is scheduled to finish (according to Rule B1).

As for control contents S1003, an event message which designates to delete the contents is transmitted at 8:34:15 when the transmission of the contents data is scheduled to complete (according to Rule B3).

In accordance with the audiovisual data transmission schedule transmitted by the audiovisual data transmission scheduling unit 102, the audiovisual data transmission controlling unit 106 reads the audiovisual data which corresponds to the audiovisual data management codes included in the schedule from the audiovisual data holding unit 107, and outputs the audiovisual data to the multiplexing unit 111.

The audiovisual data holding unit 107 stores audiovisual data which corresponds to the audiovisual data management codes.

In accordance with the contents transmission schedule transmitted by the contents transmission scheduling unit 103, the data module transmission controlling unit 108 repeatedly reads the data module which corresponds to the contents codes included in the schedule from the data module holding unit 109, and outputs the data module to the multiplexing unit 111.

For instance, as for the transmission time period between 8:13:45 and 8:14:00 shown in Fig. 4, the data module transmission controlling unit 108 adjusts the frequency of the repetition transmission so that the transmission ratio of the data module for the contents C1001 to the data module for the contents C1002 is 3 to 7.

The event message transmission controlling unit 110 outputs event messages to the multiplexing unit 111 in accordance with the event message transmission schedule transmitted by the event message transmission scheduling unit 105. The transmission timing for event messages shown in Fig. 5 are conformity with the event message transmission schedule shown in Fig. 7.

As shown in Fig. 5, for the time period between 8:13:45 and 8:14:00, an event message which designates to cache contents C1002 is transmitted at a time interval of 1 sec. At 8:14:00, an event message which designates to delete contents C1001 (data module with ID=0) and an event message which designates to reproduce contents C1002 (data module with ID=1) are transmitted in this order. For the time period between 8:14:00 and 8:14:15, an event message which designates to cache contents C1003 is transmitted at a time interval of 1 sec. At 8:14:15, an event message which designates to delete contents S1001 (data module with ID=0), an event message which designates to delete the contents C1002 (data module with ID=1), and an event message which designates to reproduce contents C1003 (data module with ID=2) are transmitted in this order. At 8:14:30, an event message which designates to delete the contents S1002 (data module with ID=0) and an event message which designates to delete the contents data C1003 (data module with ID=2) are transmitted in this order. For the time period between 8:33:45 and 8:34:00, an event message which designates to cache contents C1005 is transmitted at a time interval of 1 sec. At 8:34:00, an event message which designates to delete contents C1004 (data module with ID=0) and an event message which designates to reproduce contents C1005 (data module with ID=3) are transmitted in this order. At 8:34:15, an event message which designates to delete contents S1003 (data module with ID=0) and an event message which designates to delete the contents C1005 (data module with ID=3) are transmitted in this order.

The multiplexing unit 111 performs time division multiplexing of the audiovisual data transmitted by the audiovisual data transmission controlling unit 106 and the event messages transmitted by the event message transmission controlling unit 110 to generate a multiplexed stream, and outputs the multiplexed stream to the transmission unit 112. Here, the event messages are promptly transmitted. Besides, the data modules and the event messages are transmitted by using a fixed bandwidth which is allocated to the contents data, whereas the audiovisual data is transmitted by using a fixed bandwidth which is allocated to the audiovisual data.

The transmission unit 112 modulates the multiplexed stream transmitted by the multiplexing unit 111 into the broadcast wave and transmits it.

### (Operations)

The following describes the operations for generating the data modules and the event messages and transmitting them to the multiplexing unit 111. Explanations of operations for transmitting audiovisual data and multiplexing the audiovisual data, the data module, and the event messages will be omitted, because those operations can be realized according to well-known technology.

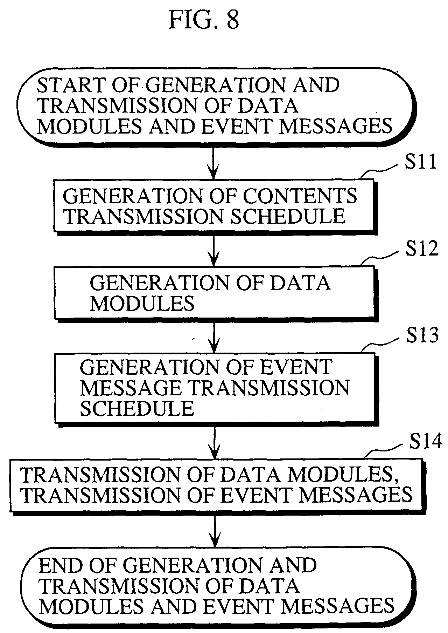

Fig. 8 is a flow chart showing a procedure for generating data modules and event messages and transmitting them.

First, the contents transmission scheduling unit 103 generates a contents transmission schedule in accordance with the program information stored in the program information holding unit 101 (Step S11). Here, the contents transmission scheduling unit 103 generates the schedule so that the bandwidth according to the above-stated (Rule A1) through (Rule A3) is allocated to the specific program for the immediately preceding time period as shown in Fig. 4.

Next, the data module generation unit 104 generates a data module using contents data stored in the contents holding unit 113 in accordance with the contents transmission schedule and outputs the data module to the data module holding unit 109 (Step S12).

Next, the event message transmission scheduling unit 105 generates an event message transmission schedule in accordance with the contents transmission schedule and the program information (Step S13).

Next, the data module transmission controlling unit 108 reads the data module from the data module holding unit 109 in accordance with the contents transmission schedule and transmits the data module to the multiplexing unit 111. In addition, the event message transmission controlling unit 110 generates event messages in accordance with the event message transmission schedule and outputs the event messages to the multiplexing unit 111 (Step S14). As a result, as shown in Fig. 5, in the immediately preceding time period, contents data for the specific program among data broadcasting programs are multiplexed with the contents data of the preceding program and the multiplexed contents data is transmitted.

### (Receiving Apparatus)

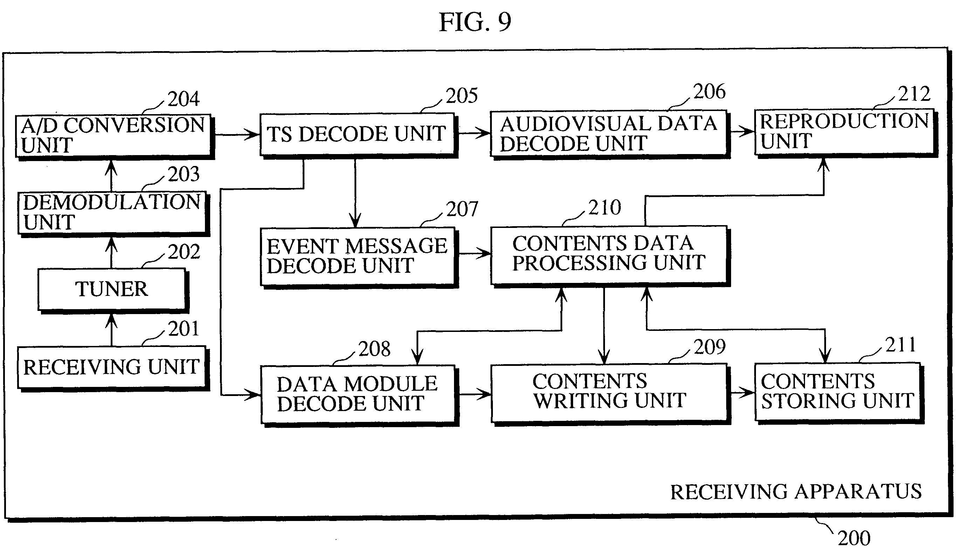

Fig. 9 is a block diagram showing the construction of the receiving apparatus. The receiving apparatus 200 is composed of a receiving unit 201, a tuner 202, a demodulation unit 203, an A/D conversion unit 204, a TS decode unit 205, an audiovisual data decode unit 206, an event message decode unit 207, a data module decode unit 208, a contents writing unit 209, a contents data processing unit 210, a contents storing unit 211, and a reproduction unit 212.

The receiving unit 201 receives broadcast wave and is made up of a parabolic antenna and so on.

The tuner 202 tunes in to the broadcast wave to receive the broadcast wave and transmits the same to the demodulation unit 203.

The demodulation unit 203 demodulates the tuned broadcast wave and transmits the same to the A/D conversion unit 204.

The A/C conversion unit 204 converts the demodulated broadcast wave into digital signals to generate a transport (TS) stream consisting of TS packets.

The TS decode unit 205 decodes the TS packets to generate an audiovisual stream and a data stream.

The audiovisual data decode unit 206 decodes the audiovisual stream and transmits the same to the reproduction unit 212.

The event message decode unit 207 decodes an event message included in the data stream and transmits the same to the contents data processing unit 210.

The data module decode unit 208 decodes the data module with ID=0 in the data stream to reconstruct contents data, and when receiving the instruction to cache the contents data with the specified ID from the contents data processing unit 210, decodes the data module with the specified ID. Then, the data module decode unit 208 transmits a message included in the reconstructed contents data to the contents data processing unit 210, associates graphical images and execution scripts in the contents data with IDs, and transmits the same to the contents writing unit 209.

The contents writing unit 209 stores the contents transmitted from the data module decode unit 208 in the contents storing unit 211.

The contents data processing unit 210 receives the event messages from the event message decode unit 207 and the messages from the data module decode unit 208. In case that the received event message designates to delete the contents, the contents data processing unit 210 deletes the contents with the ID specified by the event message from the contents storing unit 211. In case that the received message designates to cache the contents with the specified ID and the contents has not been stored in the contents storing unit 211, the contents data processing unit 210 designates the data module decode unit 208 to decode the contents with the specified ID. In case that the received message designates to reproduce the contents, the contents data processing unit 210 reads the contents from the contents storing unit 211 and transmits the same to the reproduction unit 212.

For example, for the time period between 8:13:45 and 8:14:00 (i.e., the immediately preceding time period of the specific program CM1), the event message which designates to cache the contents with ID=1 (contents C1002) is passed form the data module decode unit 208 to the contents data processing unit 210. Then, the contents data processing unit 210 instructs the data module decode unit 208 to decode contents data C1002 with ID=1 in accordance with the event message. Consequently, the decoded contents data is stored (cached) in the contents storing unit 211 by the contents writing unit 209.

Furthermore, in accordance with the event message (which instructs to reproduce the contents data with ID=1) that is transmitted at 8:14:00 shown in Fig. 5, the contents data processing unit 210 reads the contents C1002 from the contents storing unit 211 and transmits it to the reproduction unit 212. As a result, the specific program CM1 starts to be reproduced at the starting time of the reproduction time period specified to the program.

The contents storing unit 211 serves as a buffer for storing the contents data, while associating the contents data with the IDs.

The reproduction unit 212 reproduces the audiovisual data and the contents.

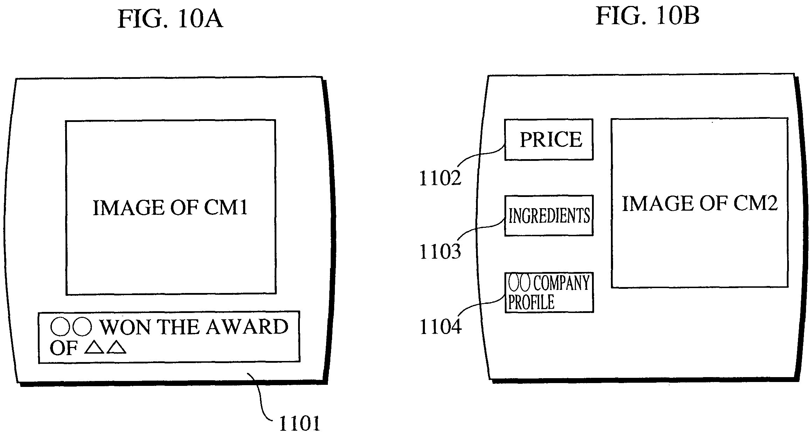

Fig. 10 shows examples of reproduced images. Fig. 10A shows an example of a reproduced image of the specific program CM1. In this figure, an image of the main program CM1 is scaled down and presented on the center of the screen, and a still image (or a text) 110a included in the contents C1002 is also presented. Sounds of the main program CM1 is also reproduced at the same time. In this way, the main program CM1 and the specific program CM1 as the data broadcasting program are reproduced simultaneously. Fig. 10B shows an example of a reproduced image in which the main program CM2 and the specific program CM2 as the data broadcasting program are reproduced simultaneously in the same manner as in the Fig. 10A.

The following will describe operations for the receiving apparatus to execute scripts, when receiving event messages.

In case that the power of the receiving apparatus is turned ON during the time period between 8:13:45 and 8:14:00 and a user starts to view the program which is simultaneously broadcast as shown in Fig. 5, the receiving apparatus receives contents C1001 with ID=0 and starts to reproduce the contents (i.e., to make the contents active). In this state, when receiving an event message which designates a cache operation, the receiving apparatus executes a script included in the contents C1001 which corresponds to the event message, so that contents C1002 with ID=1 is cached. After that, at 8:14:00, the receiving apparatus receives (a) an event message which designates to delete the active contents C1001 (ID=0) and (b) an event message which designates to reproduce the cached contents C1002 (ID=1). Then, the receiving apparatus executes a script included in the contents C1001 that is being active at that point in time in accordance with the event messages (a) and (b), so that the contents C1001 is deleted and the cached contents C1002 (ID=1) starts to be reproduced.

Thereby, for the time period between 8:14:00 and 8:14:15, the contents C1002 (ID=1) is reproduced (i.e., becomes active). In this time period, when the receiving apparatus receives an event message which designates a cache operation, the receiving apparatus executes a script included in the active contents C1002 (ID=1), so that contents C1003 (ID=2) is cached.

Alternatively, in case that the power of the receiving apparatus is turned ON during the time period between 8:14:00 and 8:14:15 and a user starts to view the program which is simultaneously broadcast as shown in Fig. 5, the receiving apparatus reproduces contents S1001 with ID=0. Since the contents S1001 is control contents including scripts only, the receiving apparatus makes the scripts active (i.e., executable). In the time period, when the receiving apparatus receives an event message which designates a cache operation, the receiving apparatus executes the script included in the active contents S1001 (ID=0) so that the contents C1003 (ID=2) is cached.

As stated above, according to the broadcasting apparatus of the invention, the contents data of the specific program is transmitted as well as the contents data of the preceding data broadcasting program in the immediately preceding time period of the specific program. Therefore, the receiving apparatus can receive the contents data of the specific program prior to the reproduction time period of the specific program, so that all interactive operations which are free from the waiting time for receiving the data can be realized from the beginning of the reproduction time period of the specific program.

In addition, according to the broadcasting apparatus of the invention, the contents data of the specific program is transmitted only in the immediately preceding time period of the program, and the contents data is not transmitted in the reproduction time period of the program. Therefore, in case that the reproduction time period does not fall on the immediately preceding time of specific programs, only control contents or event messages is transmitted, so that a transmission load can be reduced.

### [Modifications]

Although the embodiment of the broadcasting apparatus according to the invention is described as above, the invention is not limited to the above embodiment. That is, naturally, the invention includes the following modifications.

### (1) Immediately Preceding Time Period

In the above embodiment, as shown in Figs. 4 and 5, the immediately preceding time periods of CM1, CM2, and CM3 have the same length of time as the reproduction time periods of their respective programs. However, the immediately preceding time period may have the time length long enough to transmit the contents at least once. Specifically, considering the occurrence of a transmission error or the like, it is preferable that the immediately preceding time period is long enough to transmit the specific program multiply times (e.g., five times).

### (2)Bandwidth for Transmitting Specific Programs

In the above embodiment, the bandwidth for transmitting the specific program for the preceding time period is set at 0.7D, and the remaining bandwidth (i.e., 0.3D) is used for transmitting the normal program for the reproduction time period. However, these bandwidth is not limited to such an example. When widening the bandwidth for transmitting the specific program, it is possible to shorten the time period that is necessary for transmitting the contents a predetermined times (e.g., five times).

In addition, the transmission bandwidth D for the data broadcasting program may be variable.

### (3)Event Messages

In the above embodiment, in order to make the receiving apparatus cache the contents of the specific program which has been transmitted in the immediately preceding time period, an event message is transmitted at regular intervals. Instead, a message which designates to cache the contents may be embedded in the data module.

In addition, in case that an event message which designates to delete contents and an event message which designates to reproduce other contents should be transmitted at the same time, these event messages may be transmitted as one event message. For instance, two event messages shown in Fig. 7 which should be transmitted at 8:14:00 (i.e., a deletion designation of C1001 and a reproduction designation of C1002) may be constructed as one event message which designates the deletion of C1001 and the start of reproduction of C1002.

Further, the event message may specify only a script inserted in the data module. In this case, the transmitting apparatus may be constructed so as to insert the script in the data module with ID=0. For instance, an event message which designates a cache operation may have "a message ID and an ID of the contents which should be processed" as the contents and the script may be a program for performing the process (one of cache, reproduction, and deletion) according to the message ID of the ID of the contents which should be processed. While, the receiving apparatus may be constructed so as to, when receiving the event message, execute the script corresponding to the event message.

### (4)Specific Programs

In the above embodiment, commercials are described as the specific programs. However, normal programs may be specific programs. In this case, it is preferable that the data size of the contents of the specific program does not exceed the storage capacity of the contents storing unit 211 (buffer) in the receiving apparatus .

### (5)Broadcast Programs

Although the above embodiment deal with the case where the main program and the data broadcasting program are reproduced simultaneously, this invention is naturally applicable in the case where they are not reproduced simultaneously but the desired data broadcasting program is specified for the specific program.

### (6)Transmission Bandwidth

The data module transmission controlling unit 108 controls bandwidths for transmitting a plurality of data modules by adjusting the frequency of the occurrence of these data modules in the repetition transmission. If these data modules are the same in size, their transmission bandwidths can be determined by the frequency of the occurrence. On the other hand, if these data modules are different in size, the frequency of the occurrence can be adjusted in view of their sizes.

### (7) Programs

The invention can be realized by preparing programs in which functions of the broadcasting apparatus shown in Fig. 1 and the receiving apparatus shown in Fig. 9 are described and by executing the programs by a microcomputer provided in the broadcasting apparatus and the receiving apparatus. These programs can be recorded on the recording media such as CDs and hard disks and can be readable to the microcomputer in the broadcasting apparatus and the receiving apparatus. Alternatively, these programs may be taken in the broadcasting apparatus and the receiving apparatus through a communication network.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A broadcasting apparatus that broadcasts broadcast programs, each of which is to be reproduced by a receiving apparatus in a reproduction time period between a reproduction starting time and a reproduction finishing time, the broadcasting apparatus comprising:
scheduling means for generating a schedule for transmitting the broadcast programs, the schedule including a transmission starting time and a transmission finishing time for each broadcast program; and
transmission means for transmitting each broadcast program only in the time period between the transmission starting time and the transmission finishing time according to the schedule,
wherein the scheduling means generates the schedule so that (a) as for a specific program among the broadcast programs, a transmission starting time is set at a time a predetermined amount of time before the reproduction starting time of the specific program and a transmission finishing time is set at the reproduction starting time of the specific program, and (b) as for a broadcast program other than the specific program, a transmission starting time is set at the reproduction starting time of the broadcast program and a transmission finishing time is set at the reproduction finishing time of the broadcast program.

2. The broadcasting apparatus of Claim 1,
wherein the predetermined amount of time in the schedule generated by the scheduling means is a time period necessary for transmitting the specific program at least once.

3. The broadcasting apparatus of Claim 2,
wherein the scheduling means includes generation means for generating (a) first messages which designate the receiving apparatus to store the specific program in a storing unit within the receiving apparatus and (b) a second message which designates the receiving apparatus to reproduce the specific program stored in the storing unit, and
the transmission means transmits (a) the first messages for a duration from the transmission starting time to the transmission finishing time of the specific program, and (b) the second message in the reproduction time period of the specific program.

4. The broadcasting apparatus of Claim 1,
wherein the scheduling means includes generation means for generating (a) first messages which designate the receiving apparatus to store the specific program in a storing unit within the receiving apparatus and (b) a second message which designates the receiving apparatus to reproduce the specific program stored in the storing unit, and
the transmission means transmits (a) the first messages for a duration from the transmission starting time to the transmission finishing time of the specific program, and (b) the second message in the reproduction time period of the specific program.

5. A method for broadcasting broadcast programs, each of which is to be reproduced by a receiving apparatus in a reproduction time period between a reproduction starting time and a reproduction finishing time, the method comprising the steps of:
a scheduling step for generating a schedule for transmitting the broadcast programs, the schedule including a transmission starting time and a transmission finishing time for each broadcast program; and
a transmission step for transmitting each broadcast program only in the time period between the transmission starting time and the transmission finishing time according to the schedule,
wherein in the scheduling step the schedule is generated so that (a) as for a specific program among the broadcast programs, a transmission starting time is set at a time a predetermined amount of time before the reproduction starting time of the specific program and a transmission finishing time is set at the reproduction starting time of the specific program, and (b) as for a broadcast program other than the specific program, a transmission starting time is set at the reproduction starting time of the broadcast program and a transmission finishing time is set at the reproduction finishing time of the broadcast program.

6. The method of Claim 5,
wherein the predetermined amount of time in the schedule generated in the scheduling step is a time period necessary for transmitting the specific program at least once.

7. The method of Claim 6,
wherein, in the scheduling step, (a) first messages which designate the receiving apparatus to store the specific program in a storing unit within the receiving apparatus and (b) a second message which designates the receiving apparatus to reproduce the specific program stored in the storing unit are generated, and
in the transmission step, (a) the first messages are transmitted for a duration from the transmission starting time to the transmission finishing time of the specific program, and (b) the second message is transmitted in the reproduction time period of the specific program.

8. The method of Claim 5,
wherein, in the scheduling step, (a) first messages which designate the receiving apparatus to store the specific program in a storing unit within the receiving apparatus and (b) a second message which designates the receiving apparatus to reproduce the specific program stored in the storing unit are generated, and
in the transmission step, (a) the first messages are transmitted for a duration from the transmission starting time to the transmission finishing time of the specific program, and (b) the second message is transmitted in the reproduction time period of the specific program.

9. A program recording medium which is readable for a computer in a broadcasting apparatus, the broadcasting apparatus broadcasts broadcast programs, each of which is to be reproduced by a receiving apparatus in a reproduction time period between a reproduction starting time and a reproduction finishing time, a computer program embodied on the program recording medium has the computer conduct the steps of:
a scheduling step for generating a schedule for transmitting the broadcast programs, the schedule including a transmission starting time and a transmission finishing time for each broadcast program; and
a transmission step for transmitting each broadcast program only in the time period between the transmission starting time and the transmission finishing time according to the schedule,
wherein in the scheduling step the schedule is generated so that (a) as for a specific program among the broadcast programs, a transmission starting time is set at a time a predetermined amount of time before the reproduction starting time of the specific program and a transmission finishing time is set at the reproduction starting time of the specific program, and (b) as for a broadcast program other than the specific program, a transmission starting time is set at the reproduction starting time of the broadcast program and a transmission finishing time is set at the reproduction finishing time of the broadcast program.

10. A program that is executed by a computer in a broadcasting apparatus, the broadcasting apparatus broadcasts broadcast programs, each of which is to be reproduced by a receiving
apparatus in a reproduction time period between a reproduction starting time and a reproduction finishing time, the program has the computer conduct the steps of:
a scheduling step for generating a schedule for transmitting the broadcast programs, the schedule including a transmission starting time and a transmission finishing time for each broadcast program; and
a transmission step for transmitting each broadcast program only in the time period between the transmission starting time and the transmission finishing time according to the schedule,
wherein in the scheduling step the schedule is generated so that (a) as for a specific program among the broadcast programs, a transmission starting time is set at a time a predetermined amount of time before the reproduction starting time of the specific program and a transmission finishing time is set at the reproduction starting time of the specific program, and (b) as for a broadcast program other than the specific program, a transmission starting time is set at the reproduction starting time of the broadcast program and a transmission finishing time is set at the reproduction finishing time of the broadcast program.
